# EUROPEAN PATENT APPLICATION

(11) **EP 1 770 613 A1**
(43) Date of publication of application: **04.04.2007**
(21) Application number: 05108672.6
(22) Date of filing: 20.09.2005
(51) Int. Cl.: G06Q 10/00

(54) **Warehouse management system with data input from industrial trucks**

(71) Applicant: Atlet AB, 43582 Mölnlycke (SE)
(72) Inventor: Ek, Håkan, 438 36, Landvetter (SE)
(74) Representative: Lind, Urban Arvid Oskar

(57) **Abstract**

A warehouse management system is disclosed, comprising: a database server; a first database connected to the database server and including data related to goods in a warehouse, said data including quantities and location of said goods. Further, there is provided input means for registration of input and output of goods at storage locations in the warehouse as well as input means for registration of industrial truck related data, said truck data providing information about movement of the goods within the warehouse, wherein said truck data is usable to add information content related to the goods in said database. Hereby, the data of the WMS can be greatly improved, in terms of e.g. accuracy and efficiency.

## Description

### Field of the invention

The present invention relates to an warehouse management system, and a related method for automated warehouse management.

### Background of the invention

Many different types of warehouse management systems (WMS) have been proposed and developed during the years, and today such WMS systems are commercially available from e.g. EXE Technologies, Chess Logistics Technology and Catalyst International.

WMS systems are, in the most simple form, dedicated to control movement and storage of materials within a warehouse, but in more complex WMS systems, the role of WMS is expanding to including light manufacturing, transportation management, order management, and complete accounting systems. The primary purpose of a WMS is to control the movement and storage of materials within an operation and process the associated transactions. Thus, it provides directed picking, directed replenishment, and directed putaway. The detailed setup and processing within a WMS can vary significantly from one software vendor to another, however the basic logic will use a combination of item, location, quantity, unit of measure, and order information to determine where to stock, where to pick, and in what sequence to perform these operations.

Most information input to the WMS system is today made manually in input terminals, where goods is checked out when it is to be moved, and checked in when unloaded to a new storage location. This input of information is typically done by means of bar-code readers by an operator of an industrial truck or the like. However, as the as the functionalities provided by the WMS systems are constantly becoming more sophisticated, the need for updated information about the goods increases. Thus, there is a need for more, and preferably automatically and continuously provided information about the goods.

There is therefore a need for an improved warehouse management system and method for automated warehouse management.

### Summary of the invention

It is therefore an object of the present invention to provide a warehouse management system, and a method for operation of the same, which is more effective and/or is more cost efficient than previously known systems, and which thereby alleviates the above-discussed problems.

This object is achieved with a warehouse management system and a method according to the appended claims.

According to a first aspect of the invention there is provided a warehouse management system comprising:
a database server;
a first database connected to said database server and including data related to goods in a warehouse, said data including quantities and location of said goods;
input means for registration of input and output of goods at storage locations in the warehouse;
input means for registration of industrial truck related data, said truck data providing information about movement of the goods within the warehouse, wherein said truck data is usable to add information content related to the goods in said database; and
a communication network for forwarding information from said input means to said database server.

In this warehouse management system (WMS), industrial truck related data is received from input means on the industrial truck, and sent to the database server. Hereby, the information content in the database can be increased to include not only conventional WMS data, but also data concerning events that has occurred during transportation of the goods, and other goods specific information determinable by the truck. Such additional information which may be derivable from the industrial trucks is one or several of the following types of information:
- The distance that the goods have been transported.
- The time that the goods have been transported.
- The number and severity of impacts and collisions that has occurred during the transportation.
- The temperature to which the goods have been exposed during transportation.
- The number of stops that has occurred during transportation.
- The weight of the goods.
- The time the goods have been lifted.
- The number of lifting cycles performed during the transportation.
- The number of pallets that has been lifted during a transportation.
- The identity of the driver or operator in charge of the transportation.
Other truck related data is however also determinable by the truck, and may also be used to add the information content of the goods in the database.

This added information content in the database is useful in many ways. For example, the information may be used to identify goods in which there is an increased likelihood of damages or the like, e.g. due to collisions that has occurred during transportation or exposure to elevated heat, and to use this to alert for inspection of the goods or the like. Further, the weight of the goods estimated by the truck could advantageously be compared to a nominal weight value that may be present in the database, in order to identify deviations. The added information may also be used to perform confirmation and security checks of the ordinary data inputted through the conventional WMS input means.

The truck related data is easy and inexpensively accessible from the industrial truck, especially since much of the information is already available through the control system on a conventional industrial truck. In addition, the data related to the industrial can be registered/generated and forwarded to the database server automatically, without any involvement of the truck driver or the like. This makes the system easy to use.

The input means for registration of industrial truck related data is preferably arranged to register such data automatically, and preferably comprises at least one detector or gage arranged on an industrial truck. Hereby, the input of truck related data can be accomplished in a reliable and automated fashion, and without necessity of human interaction or the like. Thus, it can be ensured that all relevant data is transmitted from the truck to the warehouse management system in due time. To this end, it is preferred that at leas some of the input means used for registration of the truck related data are registration means (hardware and/or software) already present on the truck, whereby the implementation of the system becomes cost-effective.

It is further preferred that the input means for registration of industrial truck related data is arranged to communicate with the database via a wireless communication network. Hereby, it is possible to transmit data between the industrial truck and central parts of the warehouse management system during operations, e.g. continuously or at least when the truck is in a zone with sufficient radio coverage for the transmission over the wireless communication network. In particular, it is preferred to have at least one remote client of a client-server network configuration arranged on the industrial truck, wherein the remote client is connected to the input means for registration of input and output of goods at storage locations in the warehouse and the input means for registration of industrial truck related data, and wherein the database server and the client are arranged to communicate via the wireless communication network. In such a configuration, the registration of data can be made continuously in the remote client, and the data to be sent to the server can be determined locally, in order to achieve a more efficient data transfer. For example, the data received in the remote client can be aggregated in various ways. Further, the remote client can optimize the transfer of data in accordance with the transmission performance, so that e.g. higher prioritized data is transferred first when the transmission bandwidth is limited, etc.

Preferably, the remote client comprises a plug-in module connected to the control system of the industrial truck. Hereby, the control system of the truck can be made to be operative both as the control system for the truck and as the interface for the input means for registration of truck related data for the warehouse management system. Specifically, the control system of the truck can hereby be operated as a remote client of the warehouse management system. By using the control system of the truck in this way, the implementation of the inventive system becomes very easy and cost-efficient.

In a preferred embodiment, the warehouse management system further comprises a second database including data related to individual trucks and/or individual drivers, wherein said input industrial truck related data is useable to add information content to said second database. Hereby, the warehouse management system is also operable as a truck management system, wherein it is possible to store data for individual trucks or drivers. Such data can be used for establishing a need for service of the trucks, for input to billing systems, for determination in retrospect of the reasons for accidents, errors and the like, etc.

Preferably, the communication network is bidirectional, whereby said communication network is also usable for transmitting control data to the industrial truck.

According to another aspect of the invention, there is provided a method for automated warehouse management comprising the steps:
providing a first database including data related to goods in a warehouse, said data including quantities and location of said goods;
inputting data about input and output of goods at storage locations in the warehouse;
inputting industrial truck related data, said truck data being providing information about movement of the goods within the warehouse, wherein said truck data is usable to add information content related to the goods in said database; and
forwarding the input data to said first database.

By means of this aspect, similar advantages and preferred features are associated as discussed above with reference to the previous aspect.

According to still another aspect of the invention, there is provided a use in a warehouse management system of data generated by at least one industrial truck for extending and/or improving the information content related to the goods managed by the warehouse management system. By means of this aspect, similar advantages and preferred features are associated as discussed above with reference to the previous aspects.

These and other aspects of the invention will be apparent from and elucidated with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic overview of an exemplary WMS system according to an embodiment of the present invention;
Fig 2 is a schematic overview of an exemplary industrial truck in which can be used in conjunction with the present invention; and
Fig 3 is a schematic block diagram of the industrial truck in fig. 1.

### Description of preferred embodiments

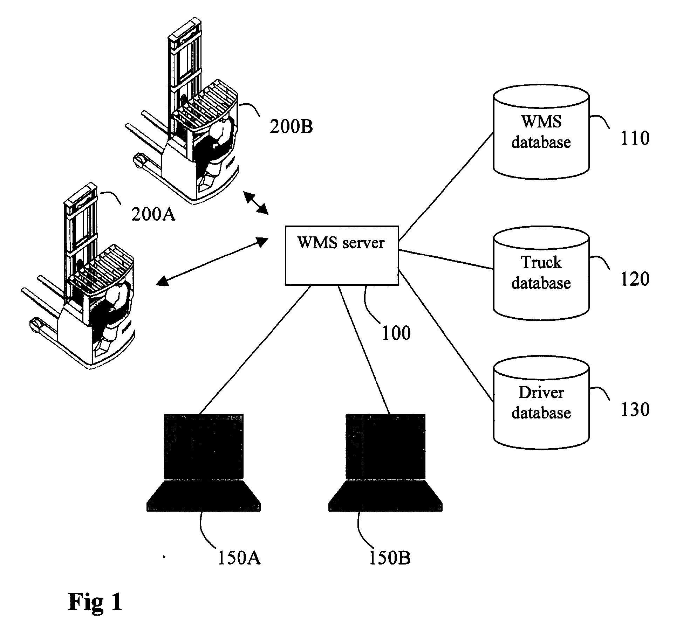

With reference to fig 1, an exemplary warehouse management system (WMS) according to an embodiment of the invention comprises a WMS server 100, and connected thereto three databases: a WMS database 110, a truck database 120 and a driver database 130. It will be appreciated by someone skilled in the art that the databases need not be physically separated, but can be arranged in the same data storage, etc. Further, the WMS server 100 and the databases 110-130 may form a single unit, e.g. arranged within a stand-alone computer, or be arranged in separated units, and connected via a data communication network, such as a LAN, or the like.

The WMS database 110 includes data related to goods in a warehouse, such as quantities and location of said goods. The truck database 120 includes data related to the individual trucks being operated within the warehouse, and being connected to the WMS server. The driver database 130 includes data related to the individual truck drivers operating the trucks within the warehouse. All the databases are discussed in greater detail in the following.

The WMS system further comprises input means for registration of input and output of goods at storage locations in the warehouse. These input means could comprise remote clients 150A, 150B, such as computers, with input means such as keyboards, barcode scanners, RFID transceivers, etc. Such input means for WMS systems are per se previously known in the art, and will consequently not be discussed any further in the following.

The WMS system incorporates conventional warehouse management functionality as is per se well known in the art. Thus, the WMS system for use in the present invention can be a modified version of essentially any commercially available WMS system. Such WMS systems are, in the most simple form, dedicated to control movement and storage of materials within a warehouse, but in more complex WMS systems, the role of WMS is expanding to including light manufacturing, transportation management, order management, and complete accounting systems. The primary purpose of a WMS is to control the movement and storage of materials within an operation and process the associated transactions. Thus, it provides directed picking, directed replenishment, and directed putaway. The detailed setup and processing within a WMS can vary significantly from one software vendor to another, however the basic logic will use a combination of item, location, quantity, unit of measure, and order information to determine where to stock, where to pick, and in what sequence to perform these operations. The present invention is not limited to any specific type of WMS system.

In addition, the WMS system receives truck related input from industrial trucks 200A, 200B operating in the warehouse. This truck data provides information about e.g. movement of the goods within the warehouse, and can consequently add information content related to the goods in the WMS database 110. The trucks and the data that can be provided from these are discussed in greater detail in the following.

The data transmission between the input means 150A, 150B for goods registration and the WMS server is preferably achieved through wired transmission, and e.g. through a LAN. However, it is also possible to use wire-less transmission and the like.

The data transmission between the input means located on the trucks 200A, 200B and the WMS server is preferably achieved through wire-less transmission, e.g. by using Bluetooth or other radio transmission on a publicly available radio frequency band. However, it is also possible to use wired transmission, whereby the data transmission can take place when the truck is docked for charging the batteries, and the like.

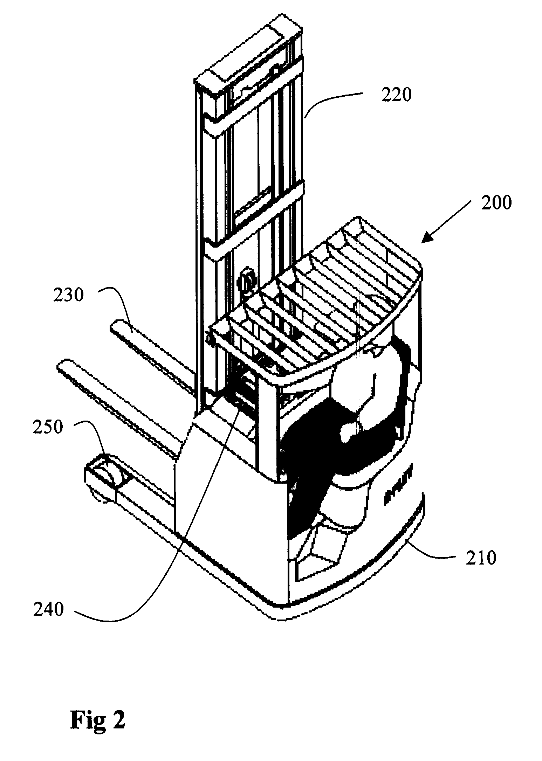

Referring now to Fig. 2, there is shown a perspective view of an industrial truck 200, in the preferred embodiment being referred to as a fork lift truck. Vehicle 200 comprises a frame 210, to which are mounted the major operating components of the vehicle 200, such as a main telescoping mast 220, for lifting of forks 230, an operator control station 240, two non-steerable wheels 250, and a drive wheel 260 (not visible in fig 2).

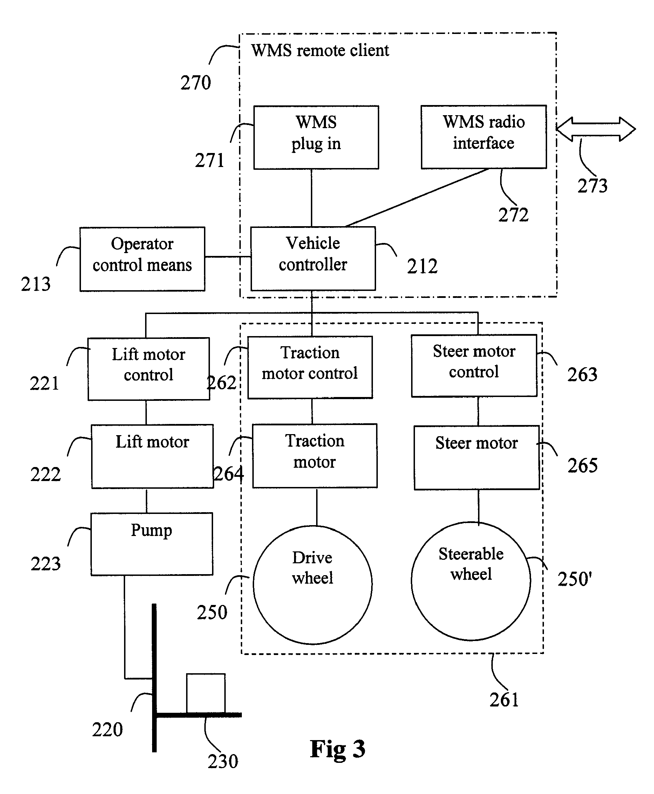

Referring now to Fig. 3, a block diagram of the lift truck 200 in Fig 2 is illustrated. The lift truck comprises a vehicle controller 212 which receives operator input signals from operator control means 213, such as handles, key switches, pedals, stick controllers, steer wheels, control buttons etc. Based on the received signals, the controller provides command signals to each of a lift motor control 221 and a drive system 261 including both a traction motor control 262 and a steer motor control 263, as is per se known in the art. The drive system provides a motive force for driving the lift truck in a selected direction, while the lift motor control 221 drives forks 230 along the mast 220 to raise or lower a load. The lift truck 200 and vehicle controller 212 are powered by one or more battery (not shown).

The traction motor control 262 drives a traction motor 264 which is connected to a drive wheel 250 to provide motive force to the lift truck. The speed of the traction motor 264 and associated wheels is selected by the operator from an operator control handle or the like, and is typically monitored and controlled through feedback provided by an encoder or other feedback device coupled to the traction motor 264. The wheel 250 may also be connected to a friction brake through the drive motor, providing both a service and parking brake function for the lift truck 200. The traction motor 264 is typically an electric motor.

The steer motor control 263 is connected to drive a steer motor 265 and associated steerable wheel 250' in a direction selected by the operator. Again, the steer motor 265 is typically a DC electric motor. An encoder or other feedback device is typically coupled to the steer motor, and a signal is provided to the steer motor control 263 to maintain the direction of travel of the lift truck 200 within a predetermined range of the selected direction of motion. The steerable wheel 250' and the drive wheel 250 may be one and the same, i.e. a single, combination steering and drive wheel 250 that is driven by the traction motor 64 via an internal drive shaft (not shown).

The lift motor control 221 provides command signals to control a lift motor 222 which is connected to a hydraulic circuit including a pump 223 for driving the forks 230 along the mast 220, thereby moving the load up or down. In some applications, the mast 220 can be a telescoping mast, whereby additional hydraulic circuitry is provided to raise or lower the mast 220 as well as the forks 230.

In industrial trucks of the above-discussed type it is well-known to provide a number of sensors for measuring and estimating the working conditions for the truck in general, as well as the individual motors and hydraulic systems. The output from these sensors are normally sent to the vehicle controller 212, either directly or in various forms of aggregated signals.

In the present embodiment, the vehicle controller 212 is further preferably arranged to be operable as a remote client 270 in the WMS system. This can e.g. be achieved by adding a WMS plug-in 271 to the vehicle controller 212, comprising control software for determining data to be forwarded to the WMS-system, for aggregating and packaging said data into a suitable form and format, and for communicating with the WMS-system. Such a plug-in can be arranged in the truck when manufactured, or arranged afterwards. The communication is preferably made through a wireless transmission network 273, such as a WLAN, by using a wireless transceiver 272 connected to the vehicle controller 212. The remote client is preferably arranged to manage sporadic communications access while travelling in and out of one or more limited coverage WLAN access zones/spots.

The remote client 212 is further preferably provided with a user interface for communicating with the operator of the truck. Such an interface could comprise output devices such as a display, a speaker and the like, and input devices such as a keyboard, a touch-screen, a mouse, etc.

The wireless transmission route between the industrial trucks and the WMS server can be unidirectional, whereby data is only forwarded from the trucks to the WMS server. However, in a preferred embodiment, the transmission route is bidirectional, whereby control signals, requests for information, etc can also be forwarded from the WMS server to the individual trucks. This can used for requesting certain information from the truck, for updating software in the truck, for controlling operating parameters of the truck and/or the local remote WMS client, etc. The bidirectional communication with the trucks on site is usable e.g. by the truck manufacturer. Remote access to the truck is thereby accomplished, e.g. through the internet. The remote access to the trucks and the truck related database provide a whole range of potential benefits and cost savings relates to e.g. after market support, efficient service processes, warranty, engineering feedback, rental/leasing contracts etc.

Information that can be derived in the vehicle controller 212 of the truck, and that can be useful for the WMS-system, is e.g. one or several of the following types of information:
- The distance that the goods have been transported. This information is e.g. available from the ordinary travel distance measurement provided on conventional trucks.
- The time that the goods have been transported. This information is e.g. easily available by the provision of a clock in the vehicle controller.
- The number and severity of impacts and collisions that has occurred during the transportation. This information can e.g. be provided by accelerometers provided on the truck.
- The temperature to which the goods have been exposed during transportation. This data can e.g. be provided by means of a thermometer arranged on the truck.
- The number of stops that has occurred during transportation. This information is e.g. determinable by means of an accelerometer, an rpm-gage for the driving wheel, or the like.
- The weight of the goods. This is e.g. determinable by the provision of gages on the fork lift or in the hydraulic system for operating this.
- The time the goods have been lifted. This can be estimated by a clock provided in the vehicle controller.
- The number of lifting cycles performed during the transportation. This can be determined by a counter provided in the vehicle controller.
- The number of pallets that has been lifted during a transportation. This can e.g. be determined by optical sensors arranged in connection with the fork lift system.
- The identity of the driver or operator in charge of the transportation. This can be determined by means of any type of identification means, such as a personal key for each driver.
Other truck related data is however also determinable by the truck, and may also be used to add the information content of the goods in the database.

Thus, the WMS system of the invention provides an improved system for administration of goods, i.e. for keeping track on where the goods is located, etc, and can also be connected to ordering for picking up of the goods, for enabling of statistics, analysis of efficiency, etc. It is also possible to log truck operations per e.g. customer accounts for cost allocating for billing purposes and the like. Registration of the customer to which the goods belong could be determined through ordinary WMS registration, through manual input by the operator, automatically by means of RFID-tags, etc.

By the use of the truck database 120 and driver database 130, the WMS system is also operable for logging data on individual trucks and/or drivers, for providing statistics for trucks and drivers related to time, efficiency and the like, collisions control and follow-ups, etc. For example, this could be useful for associating damages and the like to specific drivers. The driver input is preferably provided by associating drivers with individual keys or the like for identification, whereby the truck can be constantly aware of the identification of the driver presently operating the truck.

The truck database can be used for assemble individual truck information for the entire lifetime of the trucks, which can also be used for analysis for research and development purposes.

By means of the truck related data being provided to the WMS system, it is e.g. possible to make different types of cycle analysis, such as driving distance and/or time per order line, lifting times/cycles per order line, number of pallets per order line, and weight of goods per order line. It is also possible to log truck/driver activity per account or activity, to be used for e.g. 3^{rd} party logistics and in activity based costing (ABC) models. Hereby, the resulting benefits will be e.g. that it can help to continuously improve the operational performance, and that it can help price and charge the service to customers more competitively while maintaining a solid control of the cost base and margins. Benefits outside the scope of the pure WMS related customer input above is the possibility to more easily and effectively, i.e. in a single-point centralised and automated fashion, administer and log driver behaviour and based on such results take measures to reduce the direct and indirect costs associated with damages, machine downtime and poor driving performance. Thus, this system provides a substantial productivity gain, due to a more detailed process/cycle knowledge and awareness. Hereby, a more efficient, productive and adaptive overall warehouse management situation is obtainable, which is especially useful when an entire fleet of trucks is used on a particular warehouse site.

Specific embodiments of the invention have now been described. However, several alternatives are possible, as would be apparent for someone skilled in the art. For example, the WMS system may be any general type of known WMS system, and for provision of any type of known or expected WMS functionality, many different types of data input from the industrial trucks may be used, different transmission protocols and communication networks may be used, etc. Still further, the implementation of the control method could be accomplished in different ways, such as in especially dedicated hardware or in software for control of already existing control means. Such and other obvious modifications must be considered to be within the scope of the present invention, as it is defined by the appended claims.

## Claims

1. A warehouse management system comprising:
a database server;
a first database connected to said database server and including data related to goods in a warehouse, said data including quantities and location of said goods;
input means for registration of input and output of goods at storage locations in the warehouse;
input means for registration of industrial truck related data, said truck data providing information about movement of the goods within the warehouse, wherein said truck data is usable to add information content related to the goods in said database; and
a communication network for forwarding information from said input means to said database server.

2. The warehouse management system of claim 1, wherein the input means for registration of industrial truck related data is arranged to register such data automatically, and preferably comprises at least one detector or gage arranged on an industrial truck.

3. The warehouse management system of claim 2, wherein the detector or gage arranged on the industrial truck is arranged to detect at least one of: weight of the goods, lifting time, number of lifting cycles, distance traveled, traveling time, number of stops, information about collisions and impacts, number of pallets lifted and driver identity.

4. The warehouse management system of any one of the preceding claims, wherein the input means for registration of industrial truck related data is arranged to communicate with the database via a wireless communication network.

5. The warehouse management system of claim 4, further comprising at least one remote client arranged on an industrial truck, wherein the remote client is connected to the input means for registration of input and output of goods at storage locations in the warehouse and the input means for registration of industrial truck related data, and wherein the database server and the client are arranged to communicate via a wireless communication network.

6. The warehouse management system of claim 5, wherein the remote client comprises a plug-in module connected to the control system of the industrial truck.

7. The warehouse management system of any one of the preceding claims, further comprising a second database including data related to individual trucks and/or individual drivers, wherein said input industrial truck related data is useable to add information content to said second database.

8. The warehouse management system of any one of the preceding claims, wherein the communication network is bidirectional, whereby said communication network is also usable for transmitting control data to the industrial truck.

9. A method for automated warehouse management comprising the steps:
providing a first database including data related to goods in a warehouse, said data including quantities and location of said goods;
inputting data about input and output of goods at storage locations in the warehouse;
inputting industrial truck related data, said truck data providing information about movement of the goods within the warehouse, wherein said truck data is usable to add information content related to the goods in said database; and
forwarding the input data to said first database.

10. The method of claim 9, wherein the input of industrial truck related data is generated automatically, and preferably by at least one detector or gage arranged on an industrial truck.

11. The method of claim 9 or 10, wherein the input truck related data is at least one of: weight of the goods, lifting time, number of lifting cycles, distance traveled, traveling time, number of stops, information about collisions and impacts, number of pallets lifted and driver identity.

12. The method of any one of the claims 9-11, wherein the input industrial truck related data is communicated to the database via a wireless communication network.

13. The method of any one of the claims 9-12, further comprising the step of providing a second database including data related to individual trucks and/or individual drivers. wherein said input industrial truck related data is used to add the information content in said second database.

14. Use in a warehouse management system of data generated by at least one industrial truck for extending and/or improving the information content related to the goods managed by the warehouse management system.
